# FASCICULE DE BREVET EUROPEEN

(11) **EP 4 357 249 B1**
(45) Date de publication et mention de la délivrance du brevet: **18.12.2024**
(21) Numéro de dépôt: 23194149.3
(22) Date de dépôt: 30.08.2023
(51) Int. Cl.: B64D 31/18, B64D 35/023, B64D 33/00, B64D 27/10, B64D 31/02, F02C 7/262, F02C 7/275, F02K 5/00, B64D 27/04, B64C 27/06, B64D 35/08

(54) **PROCÉDÉ ET AÉRONEF MUNI D'AU MOINS UN MOTEUR À COMBUSTION ET D'UN SYSTÈME D'ENTRAINEMENT À AU MOINS DEUX MACHINES ÉLECTRIQUES**
VERFAHREN UND FLUGZEUG MIT MINDESTENS EINEM VERBRENNUNGSMOTOR UND EINEM ANTRIEBSSYSTEM MIT MINDESTENS ZWEI ELEKTRISCHEN MASCHINEN
METHOD AND AIRCRAFT HAVING AT LEAST ONE COMBUSTION ENGINE AND A DRIVE SYSTEM HAVING AT LEAST TWO ELECTRIC MACHINES

(30) Priorité: 18.10.2022 FR 2210750
(43) Date de publication de la demande: 24.04.2024
(73) Titulaire: Airbus Helicopters, 13725 Marignane Cedex (FR)
(72) Inventeur: GAZZINO, Marc, 13012 MARSEILLE (FR)
(74) Mandataire: GPI Brevets

(56) Documents cités:
- EP-A2- 2 404 775
- EP-B1- 3 209 563
- US-A1- 2019 264 615

## Description

La présente invention concerne un procédé et un aéronef muni d'au moins un moteur à combustion et d'un système d'entraînement à au moins deux machines électriques.

Un aéronef peut comprendre au moins deux moteurs à combustion. Par exemple, un giravion peut comprendre au moins deux moteurs à combustion mettant en mouvement au moins un rotor via un système mécanique.

Un moteur à combustion peut être un turbomoteur. Un turbomoteur comporte usuellement un générateur de gaz et au moins une turbine de travail. Le générateur de gaz est muni d'un ensemble compresseur, d'une chambre de combustion et d'au moins une turbine de détente solidarisée en rotation à l'ensemble compresseur par un arbre de liaison. L'ensemble compresseur et la ou les turbines de détente forment un système mobile du générateur de gaz. La turbine de travail peut être libre, à savoir désolidarisée mécaniquement en rotation du système mobile, en étant entraînée en rotation par les gaz sortant du générateur de gaz. De plus, la turbine de travail entraîne mécaniquement en rotation, directement ou indirectement, un arbre de sortie du turbomoteur.

Un moteur à combustion peut être un moteur à pistons aussi pourvu d'un système mobile.

En outre, le système mobile d'un moteur à combustion peut être relié mécaniquement à un système d'entraînement. Un tel système d'entraînement comporte usuellement une source d'énergie électrique, un système de distribution électrique et une machine électrique. La machine électrique est notamment configurée pour mettre en mouvement le système mobile durant une phase de démarrage. Cette machine électrique peut être un moteur électrique pouvant uniquement fonctionner en mode moteur, ou une machine électrique pouvant fonctionner selon un mode moteur électrique et un mode générateur électrique en fonction du besoin. En mode générateur électrique, une machine électrique est mise en mouvement pour générer une énergie électrique.

Un tel système d'entraînement simplex est suffisant pour une utilisation classique d'un giravion. En effet, la panne du système d'entraînement induit de fait l'arrêt de la procédure de démarrage du moteur concerné avant vol. Le giravion reste alors au sol.

Toutefois, une installation motrice de giravion peut être dimensionnée afin de pouvoir rendre inactif un moteur à combustion de l'installation motrice durant certaines phases de vol. Dès lors, le giravion peut comprendre un système de redémarrage renforcé pour garantir le redémarrage d'un tel moteur à combustion rendu inactif.

Selon un autre aspect, une machine électrique peut être utilisée afin de mettre en mouvement le système mobile d'un moteur à combustion lors d'une phase d'arrêt du moteur à combustion. Cette mise en mouvement du système mobile permet ainsi d'évacuer les gaz chauds durant un mode de fonctionnement de ventilation.

Modifier une installation motrice existante pour ajouter un mode de fonctionnement, et par exemple pour mettre en oeuvre un mode de fonctionnement supérieur en vol ou de ventilation, peut induire de redéfinir complément le système d'entraînement.

Le document FR2967133 décrit un hélicoptère bimoteur muni de deux turbomoteurs comprenant chacun un générateur de gaz et une turbine libre. Chaque générateur de gaz coopère avec des moyens d'entraînement actifs aptes à maintenir le système mobile du générateur de gaz en rotation alors que la chambre de combustion est éteinte. De plus, le giravion comporte un dispositif d'assistance d'urgence comportant des moyens de mise à feu à effet quasi-instantané à utiliser si un redémarrage conventionnel a échoué.

Le document EP3209563 décrit un aéronef multimoteur. Au moins un premier turbomoteur est apte à fonctionner dans au moins un régime de veille au cours d'un vol stabilisé de l'aéronef, tandis que d'autres turbomoteurs sont en fonctionnement. Le turbomoteur en veille est associé à des première et deuxième chaînes électrotechniques identiques comprenant chacune une machine électrique connectée à un module d'électronique de puissance. Le module d'électronique de puissance est relié à un réseau spécifique d'alimentation en énergie électrique et à au moins un organe de stockage d'énergie électrique. Les chaînes électrotechniques peuvent être simultanément actives pour délivrer des puissances identiques ou une chaîne électrotechnique peut être active alors que l'autre chaîne électrotechnique est inactive.

Le document FR3019215 décrit un aéronef comprenant au moins deux turbomoteurs à turbine libre. Une machine électrique peut mettre en mouvement le générateur de gaz d'un premier turbomoteur en étant alimentée électriquement avec de l'énergie électrique produite par une machine électrique entraînée par un deuxième turbomoteur.

Les documents US 2019/264615 A1 et EP 2404775 A2 sont aussi connus.

La présente invention a alors pour objet de proposer un aéronef innovant visant à permettre des utilisations multiples d'un système d'entraînement d'un moteur à combustion.

L'invention vise ainsi un aéronef muni d'une installation motrice pourvue d'au moins un moteur à combustion pour mettre en mouvement une chaîne de transmission de puissance, le moteur à combustion étant relié mécaniquement à un système d'entraînement apte à mettre en mouvement un système mobile du moteur à combustion, le système d'entraînement comprenant deux machines électriques reliées chacune par une chaîne cinématique au moteur à combustion, les deux machines électriques étant reliées électriquement à au moins une source d'énergie électrique.

L'aéronef comprend un gestionnaire pilotant au moins une puissance mécanique ou un couple moteur délivré par chacune des deux machines électriques en fonction d'un mode de fonctionnement courant, ledit gestionnaire étant configuré lors d'au moins un mode de fonctionnement supérieur pour piloter les deux machines électriques afin que les deux machines électriques délivrent simultanément des puissances mécaniques ou des couples moteurs différents et non nuls.

Un mode de fonctionnement supérieur peut être applicable en vol.

Eventuellement, l'installation motrice peut comprendre deux moteurs à combustion, chaque moteur à combustion coopérant avec un système d'entraînement respectif selon l'invention.

L'expression « moteur à combustion » désigne un moteur brûlant du carburant pour mettre en mouvement un arbre de sortie, tel qu'un turbomoteur ou un moteur à pistons par exemple.

L'aéronef comporte dès lors au moins un système d'entraînement apte à mettre en mouvement un système mobile du moteur à combustion, tel qu'un ensemble de compresseur et un ensemble de détente d'un générateur de gaz d'un turbomoteur ou un vilebrequin d'un moteur à pistons par exemple.

Ce système d'entraînement comporte deux machines électriques aptes chacune à mettre en mouvement le système mobile du moteur à combustion.

De plus, un gestionnaire pilote le système d'entraînement. Le terme « gestionnaire » désigne un système pouvant générer des ordres transmis directement ou indirectement via un contrôleur, aux machines électriques pour requérir un fonctionnement particulier.

Le gestionnaire peut piloter les machines électriques selon au moins un voire une pluralité de modes de fonctionnement différents.

En particulier, le gestionnaire peut appliquer, au sol ou en vol, au moins un mode de fonctionnement dit « supérieur ».

Les puissances mécaniques ou les couples moteurs transmis au moteur à combustion par les deux machines électriques ne sont pas nécessairement équilibrées entre les deux machines électriques.

Durant un mode de fonctionnement de base, seule une machine électrique peut être pilotée pour développer un couple moteur. Un tel mode de fonctionnement de base peut comprendre un mode de démarrage normal au sol du moteur à combustion ou encore un mode de ventilation.

Durant un mode de fonctionnement supérieur une des machines électriques peut alors être pilotée pour fournir une puissance, l'autre machine électrique étant pilotée pour fournir une puissance plus élevée afin de remplir une fonction optionnelle, par exemple pour obtenir un redémarrage rapide en vol d'un moteur à combustion inactif. Un tel mode de fonctionnement supérieur peut comprendre un mode de redémarrage au sol du moteur à combustion, un mode de démarrage rapide en vol du moteur à combustion ou autres.

Le terme « inactif » associé à un moteur à combustion signifie que le moteur à combustion concerné ne développe aucune puissance, ou une puissance inférieure à un seuil. Le moteur à combustion inactif peut être totalement arrêté, ou peut être au ralenti.

Par exemple, le système mobile peut être maintenu en rotation, éventuellement à l'aide du système d'entraînement. Sur un turbomoteur à turbine libre, la turbine libre peut être arrêtée par exemple.

Ainsi, l'aéronef peut comprendre deux machines électriques dimensionnées pour remplir des fonctions de base, mais aussi si besoin des fonctions optionnelles durant un mode de fonctionnement supérieur. Dans tous les cas, le gestionnaire est configuré pour s'assurer que le couple moteur et/ou la puissance mécanique transmis au moteur à combustion est conforme au besoin d'entraînement mécanique (vitesse, accélération) correspondant au mode de fonctionnement courant.

Eventuellement, une des machines électriques peut être démontable et n'être installée que lors d'une mission requérant un fonctionnement selon un mode de fonctionnement supérieur.

Les deux machines électriques peuvent aussi être pilotées par le gestionnaire pour mettre en mouvement le système mobile d'un moteur à combustion, éventuellement dans des conditions dégradées mais suffisantes, en cas de panne d'une des deux machines électriques.

L'aéronef peut de plus comporter une ou plusieurs des caractéristiques qui suivent.

Selon une possibilité, les deux machines électriques peuvent comprendre une machine électrique de type moteur électrique ou générateur/démarreur et une autre machine électrique de type moteur électrique ou générateur/démarreur.

L'expression « générateur/démarreur » désigne une machine électrique pouvant faire office de moteur électrique ou de générateur électrique en fonction du besoin.

Par exemple, une première machine électrique est un moteur électrique, une deuxième machine électrique étant un générateur/démarreur. Par défaut, le gestionnaire peut solliciter la première machine électrique pour mettre en mouvement le système mobile du moteur à combustion, et la deuxième machine électrique pour qu'elle fonctionne en mode moteur afin d'apporter au moteur à combustion un surcroit de puissance mécanique et/ou de couple moteur durant un mode de fonctionnement supérieur et/ou pour suppléer la première machine électrique en cas de panne.

Selon un autre exemple, la première machine électrique est un générateur/démarreur, la deuxième machine électrique étant aussi un générateur/démarreur. Cette configuration permet d'assurer une redondance totale.

Selon une possibilité compatible avec les précédentes, les deux machines électriques peuvent comprendre une machine électrique non régulée en couple moteur et une autre machine électrique régulée en couple moteur.

La première machine électrique non régulée en couple moteur fournit un couple moteur figé quel que soit le mode de fonctionnement sur ordre du gestionnaire. A l'inverse, le gestionnaire pilote la consigne de couple de la deuxième machine électrique pour que le système d'entraînement fournisse au moteur à combustion le couple moteur requis au mode de fonctionnement courant.

Selon une possibilité compatible avec les précédentes, chaque machine électrique peut délivrer une puissance maximale dimensionnée pour démarrer seule le moteur à combustion durant un mode de fonctionnement de base, le gestionnaire étant configuré durant ledit au moins un mode de fonctionnement supérieur pour piloter une des deux machines électriques afin de délivrer ladite puissance maximale et l'autre machine électrique pour délivrer une puissance additionnelle.

Par exemple, le gestionnaire peut piloter une des machines électriques pour mettre en mouvement le moteur à combustion lors d'un mode de fonctionnement de base, par exemple lors d'un démarrage. Eventuellement, l'autre machine électrique est au repos, en étant soit inactive ou soit le cas échéant mise en fonctionnement selon un mode générateur d'énergie électrique. Le mode de fonctionnement de base peut permettre de réaliser un démarrage normal, la ventilation du moteur, ou une action de maintenance par exemple.

Le terme « inactif » associé à une machine électrique signifie que la machine électrique ne développe aucune puissance motrice.

A l'inverse, durant un mode de fonctionnement supérieur, le gestionnaire peut piloter les deux machines électriques au repos pour fournir une puissance égale à somme de la puissance maximale et d'une puissance additionnelle, par exemple pour obtenir un démarrage rapide, pour réactiver en vol un moteur à combustion inactif ou autres.

Selon une possibilité compatible avec les précédentes, le gestionnaire peut être configuré durant un mode de fonctionnement de base pour faire fonctionner uniquement une des deux machines électriques.

Selon une possibilité compatible avec les précédentes, l'aéronef peut comporter une interface homme-machine transmettant un signal de fonctionnement au gestionnaire, ledit signal de fonctionnement étant porteur d'un mode de fonctionnement à appliquer, le gestionnaire étant configuré pour piloter lesdites deux machines électriques en fonction dudit mode de fonctionnement à appliquer.

Une telle interface homme-machine peut comprendre un bouton, une interface tactile, vocale, visuelle ou autre.

Ainsi, un pilote peut spécifier le mode de fonctionnement à appliquer en sollicitant l'interface homme-machine, le mode de fonctionnement à appliquer devenant le mode de fonctionnement courant.

Selon une possibilité compatible avec les précédentes, l'aéronef peut comporter un senseur de puissance totale relié au gestionnaire, le senseur de puissance totale générant au moins un signal de puissance totale porteur d'une information relative à une puissance mécanique ou à un couple moteur transmis au moteur à combustion par les deux machines électriques, ledit gestionnaire étant configuré pour piloter les deux machines électriques en fonction au moins du mode de fonctionnement courant et du signal de puissance totale.

Le senseur de puissance totale peut comprendre un couplemètre usuel.

Les deux machines électriques peuvent avoir des caractéristiques et des topologies différentes. Le gestionnaire pilote les machines électriques afin que le couple moteur et/ou la puissance mécanique transmis au moteur à combustion soit conforme au besoin suivant le mode de fonctionnement courant. A cet effet, le gestionnaire peut être configuré pour prendre en considération au moins le couple moteur et/ou la puissance mécanique transmis au moteur à combustion. Le gestionnaire peut appliquer un procédé de régulation pour réguler au moins une des deux machines électriques afin au moins que le couple moteur ou la puissance mécanique transmis au moteur à combustion tende vers une valeur prédéterminée.

Eventuellement, une machine électrique peut comprendre un système de régulation de couple, le gestionnaire transmet une consigne de couple à cette machine électrique. Par exemple, la machine électrique peut être une machine synchrone à aimants ou à rotor bobiné avec onduleur de pilotage.

Selon une possibilité compatible avec les précédentes, l'aéronef peut comporter au moins un senseur de puissance motrice relié au gestionnaire, le senseur de puissance motrice générant au moins un signal de puissance motrice porteur d'une information relative à une puissance mécanique ou à un couple moteur généré par une des deux machines électriques, ledit gestionnaire étant configuré pour piloter les deux machines électriques en fonction au moins du mode de fonctionnement courant et du signal de puissance motrice.

Le senseur de puissance motrice peut comprendre un couplemètre usuel. Le senseur de puissance motrice peut comprendre un capteur de mesure du courant électrique consommé par la machine électrique, cette mesure du courant électrique consommé étant l'image du couple moteur développé par la machine électrique.

Le gestionnaire peut piloter la machine électrique afin que le couple développé par une machine électrique tende vers un seuil par exemple.

Selon une possibilité compatible avec les précédentes, l'aéronef peut comporter un senseur de fonctionnement total relié au gestionnaire, le senseur de fonctionnement total générant un signal de fonctionnement total porteur d'une information variant en fonction d'un état démarré ou non démarré du moteur à combustion, ledit gestionnaire étant configuré pour piloter les deux machines électriques en fonction au moins du mode de fonctionnement courant et du signal de fonctionnement total.

Le gestionnaire peut être configuré pour piloter les machines électriques d'une manière prédéterminée. Le gestionnaire peut déterminer si le moteur à combustion est effectivement démarré.

Selon un exemple, un calculateur moteur transmet cette information au gestionnaire. Selon un autre exemple, un senseur peut mesurer une température de gaz dans le moteur à combustion et/ou une vitesse de rotation d'un système mobile du moteur à combustion, le gestionnaire comparant les valeurs transmises à des seuils pour déterminer si le moteur à combustion est démarré ou non démarré.

En présence du moteur à combustion démarré, le gestionnaire peut arrêter la ou les machines électriques, voire peut mettre en place un mode de fonctionnement générateur d'énergie électrique afin de générer de l'énergie électrique.

En présence d'un moteur à combustion non démarré, le gestionnaire peut appliquer une procédure de secours prédéterminée pour tenter de démarrer le moteur à combustion. Par exemple, lors d'un premier, essai le gestionnaire peut solliciter une première machine électrique pour générer une puissance maximale, et peut solliciter l'autre machine électrique à cet effet lors d'un deuxième essai afin de pallier un éventuel défaut de la première machine électrique.

Selon une possibilité compatible avec les précédentes, l'aéronef peut comporter un senseur de fonctionnement électrique par machine électrique relié au gestionnaire, chaque senseur de fonctionnement électrique générant un signal de fonctionnement électrique porteur d'une donnée variant en fonction d'un état actif ou en panne de la machine électrique associée, ledit gestionnaire étant configuré pour piloter les deux machines électriques en fonction au moins du mode de fonctionnement courant et des signaux de fonctionnement électrique.

Le gestionnaire peut évaluer si une machine électrique est défectueuse et peut le cas échéant appliquer une procédure de secours prédéterminée.

Selon une possibilité, le gestionnaire est configuré pour piloter les deux machines électriques en fonction du mode de fonctionnement courant, du signal de puissance totale, du ou des signaux de puissance motrice, du signal de fonctionnement total et des signaux de fonctionnement électrique.

Selon une possibilité compatible avec les précédentes, l'aéronef peut comporter un contacteur par machine électrique, chaque contacteur étant interposé électriquement entre une machine électrique et ladite au moins une source d'énergie électrique, chaque contacteur étant piloté par le gestionnaire.

Le gestionnaire peut fermer ou ouvrir un contacteur en fonction du besoin.

Selon une possibilité compatible avec les précédentes, le moteur à combustion étant éventuellement apte à être inactif en vol, ledit au moins un mode de fonctionnement supérieur peut comporter un mode de fonctionnement de redémarrage pour redémarrer en vol le moteur à combustion rendu inactif.

Selon un autre aspect, un aéronef selon l'invention peut mettre en oeuvre un procédé particulier.

L'invention vise ainsi un procédé de pilotage d'une installation motrice d'un aéronef pourvue d'au moins un moteur à combustion pour mettre en mouvement une chaîne de transmission de puissance, le moteur à combustion étant relié mécaniquement à un système d'entraînement apte à mettre en mouvement un système mobile du moteur à combustion, le système d'entraînement comprenant deux machines électriques reliées chacune par une chaîne cinématique au moteur à combustion, les deux machines électriques étant reliées électriquement à au moins une source d'énergie électrique.

Ce procédé comporte lors d'un mode de fonctionnement supérieur, un fonctionnement des deux machines électriques en mode moteur sur contrôle d'un gestionnaire, les deux machines électriques délivrant des puissances mécaniques ou des couples moteurs différents et non nuls.

L'invention et ses avantages apparaîtront avec plus de détails dans le cadre de la description qui suit avec des exemples donnés à titre illustratif en référence des figures annexées qui représentent :
la figure 1, un aéronef monomoteur selon l'invention, et
la figure 2, un aéronef multimoteur selon l'invention.

Les éléments présents dans plusieurs figures distinctes sont affectés d'une seule et même référence.

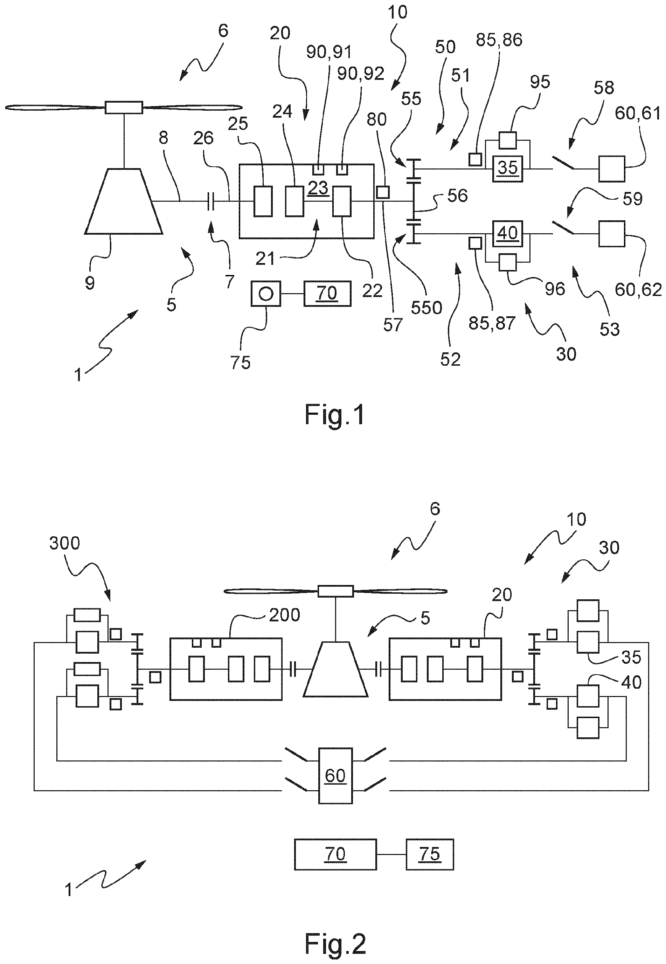

Les figures 1 et 2 illustrent des exemples d'aéronefs 1 selon l'invention. La figure 1 illustre un aéronef monomoteur alors que la figure 2 illustre un aéronef multimoteur.

En référence à la figure 1, quel que soit l'exemple, l'aéronef 1 est donc muni d'une installation motrice 10 pourvue d'au moins un moteur à combustion 20.

Le moteur à combustion 20 est muni d'un système mobile 21 et d'un arbre de sortie 26.

Le moteur à combustion 20 peut par exemple être un turbomoteur. Le turbomoteur comporte un générateur de gaz qui est muni successivement d'un ensemble compresseur 22, d'une chambre de combustion 23 et d'au moins une turbine de détente 24 solidarisée en rotation à l'ensemble compresseur 22 par un arbre de liaison. L'ensemble compresseur 22 et la ou les turbines de détente 24 forment le système mobile 21 du générateur de gaz. Le turbomoteur comporte en outre au moins une turbine de travail 25, libre ou liée à la ou les turbines de détente 24, entraînée en rotation par les gaz provenant du générateur de gaz. La turbine de travail 25 entraîne mécaniquement en rotation, directement ou indirectement, un arbre de sortie 26 du turbomoteur.

Selon un autre exemple, le moteur à combustion 20 peut être un moteur à pistons muni aussi d'un système mobile 21 et d'un arbre de sortie 26.

Quelle que soit la nature du moteur à combustion 20, son arbre de sortie 26 peut être connecté à une chaîne de transmission de puissance 5. La chaîne de transmission de puissance 5 peut déboucher sur une voilure tournante 6.

La chaîne de transmission de puissance 5 peut comprendre au moins un connecteur mécanique 7, au moins un arbre de transmission 8, au moins une boîte de transmission de puissance 9, etc. Selon l'exemple illustré, la chaîne de transmission de puissance 5 comporte un connecteur mécanique 7 relié à l'arbre de sortie 26 du moteur à combustion 20, ce connecteur mécanique 7 étant relié à un arbre d'entrée 8 d'une boîte de transmission de puissance 9 directement ou via au moins un arbre intermédiaire. La boîte de transmission de puissance 9 comporte en outre un mât rotor solidaire en rotation d'une voilure tournante 6.

Indépendamment de ces aspects, le moteur à combustion 20 est relié mécaniquement à un système d'entraînement 30. Le système d'entraînement 30 est notamment apte à mettre en mouvement le système mobile 21 du moteur à combustion 20, par exemple pour démarrer ou redémarrer le moteur à combustion 20 ou pour ventiler le moteur à combustion 20. Le système d'entraînement 30 peut éventuellement générer une énergie électrique en prélevant durant certaines phases une énergie mécanique sur le système mobile 21.

Ce système d'entraînement 30 comprend, au moins deux machines électriques 35, 40. Les deux machines électriques 35, 40 comprennent chacune un arbre de travail relié par une chaîne cinématique 50 au moteur à combustion 20, et en particulier à son système mobile 21.

Une telle chaine cinématique 50 peut comprendre une première liaison mécanique 51 connectée à une machine électrique 35 et une deuxième liaison mécanique 52 connectée à une autre machine électrique 40. Chaque liaison mécanique 51, 52 peut comprendre au moins un arbre, au moins un connecteur mécanique, au moins un palier, au moins une roue libre ou un embrayage, etc. De plus, la chaine cinématique 50 peut comprendre un engrenage 55, 56, 550 pour conjuguer la première liaison mécanique 51 et la deuxième liaison mécanique 52 et les relier à une liaison de connexion 57 solidarisée au système mobile 21 du moteur à combustion 20. La liaison de connexion 57 peut comprendre au moins un arbre, au moins un connecteur mécanique, au moins un palier, etc. Selon l'exemple illustré, la première liaison mécanique 51 et la deuxième liaison mécanique 52 sont respectivement solidaires d'un premier pignon 55 et d'un deuxième pignon 550 qui engrènent une roue de conjugaison 56, cette roue de conjugaison 56 étant solidaire d'un arbre de la liaison de connexion 57.

Par exemple, au moins une machine électrique 35, 40 peut être un moteur électrique qui peut uniquement convertir une énergie électrique en une énergie mécanique pour mettre en mouvement le système mobile 21. Eventuellement, au moins une machine électrique 35, 40 peut être un générateur/démarreur pouvant fonctionner alternativement selon un mode moteur électrique et un mode générateur d'énergie électrique en fonction du besoin.

Chaque machine électrique peut comprendre un contrôleur usuel, ce contrôleur pilotant le fonctionnement de la machine électrique.

Selon un exemple, une des deux machines électriques 35, 40 peut être un moteur électrique et l'autre machine électrique 35,40 peut être un générateur/démarreur.

Selon une autre caractéristique, chaque machine électrique 35, 40 peut être définie pour délivrer une puissance pouvant aller jusqu'à une puissance dite « puissance maximale ». Cette puissance maximale est supérieure ou égale à la puissance minimale nécessaire pour démarrer le moteur à combustion 20. Chaque machine électrique 35, 40 peut alors assurer un démarrage du moteur à combustion 20.

Eventuellement, une des deux machines électriques 35, 40 peut être une machine électrique non régulée en couple moteur et l'autre machine électrique 35,40 peut être une machine électrique régulée en couple moteur. Ainsi, le couple moteur, voire la puissance mécanique, pouvant être délivrés au système mobile 21 peuvent être réglables par le biais d'une régulation du couple moteur délivré par la machine électrique 35,40 régulée en couple moteur.

Selon une autre caractéristique, les deux machines électriques 35, 40 sont reliées électriquement à un réseau électrique 53 comprenant au moins une source d'énergie électrique 60. Une source d'énergie électrique 60 peut éventuellement être rechargeable.

Par exemple, une source d'énergie électrique 60 peut comprendre une prise de parc, une batterie électrique, une pile à combustible, une batterie d'accumulateur rechargeable ou non ou de super capacités, ou autres.

Dans le cas d'une source d'énergie électrique 60 rechargeable, cette source d'énergie électrique 60 peut être rechargée par une machine électrique 35,40 en mode génératrice ou par une autre source de bord.

Par exemple, une source d'énergie électrique 60 peut être commune à plusieurs machines électriques 35,40, ou peut être dédiée à une machine électrique 35,40. L'exemple illustré comporte une première source d'énergie électrique 61 reliée électriquement uniquement à une machine électrique 35, et une deuxième source d'énergie électrique 62 reliée électriquement uniquement à une autre machine électrique 40. La source d'énergie électrique peut être entrainée par la liaison de connexion 57, l'arbre de sortie 26 ou par le boitier mécanique 9.

Eventuellement, l'aéronef 1 comporte un contacteur 58, 59 par machine électrique 35, 40. Chaque contacteur 58, 59 est disposé électriquement entre une machine électrique 35, 40 et la ou les sources d'énergie électrique 60 reliées à cette machine électrique 35,40. Chaque contacteur 58, 59 permet ainsi de connecter ou déconnecter la machine électrique 35, 40 associée de sa ou de ses sources d'énergie électrique 61, 62.

Par ailleurs, l'aéronef 1 comprend un gestionnaire 70. Le gestionnaire 70 peut comprendre une ou plusieurs unités de traitement. Une unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Le cas échéant, le gestionnaire 70 est en liaison avec chaque contacteur 58, 59. Chaque contacteur 58, 59 peut ainsi être fermé ou ouvert sur ordre du gestionnaire 70.

Le gestionnaire 70 est configuré pour piloter le fonctionnement des deux machines électriques 35, 40 du système d'entraînement 30, en transmettant une consigne de pilotage via un signal, par exemple analogique ou numérique, à la machine électrique 35, 40, et éventuellement à son contrôleur, et/ou en ouvrant ou fermant un contacteur 58, 59. Le gestionnaire peut à cet effet mémoriser et appliquer un algorithme générant des ordres de pilotage à partir de données d'entrée.

En particulier, le gestionnaire 70 a pour fonction de piloter le fonctionnement des deux machines électriques 35, 40 en fonction d'un mode de fonctionnement courant. Le mode de fonctionnement courant peut être paramétrable à l'aide d'une interface homme-machine 75 en liaison filaire ou non filaire avec le gestionnaire 70. En particulier, l'interface homme-machine 75 peut émettre un signal de fonctionnement, analogique ou numérique, porteur du mode de fonctionnement à appliquer. Le gestionnaire 70 est configuré pour recevoir le signal de fonctionnement, éventuellement le décoder, et piloter les deux machines électriques 35, 40 conformément au mode de fonctionnement à appliquer.

Pour piloter les machines électriques 35, 40, le gestionnaire 70 peut être en liaison filaire ou non filaire avec un ou plusieurs des senseurs qui suivent.

Le terme « senseur » désigne un système comprenant un ou des capteurs afin de mesurer la valeur d'un paramètre. Le terme « capteur » désigne un capteur physique capable de mesurer directement le paramètre en question ou un système pouvant comprendre un ou des capteurs physiques ainsi que des moyens de traitement du signal permettant de fournir une estimation du paramètre à partir des mesures fournies par ce ou ces capteurs physiques. De manière similaire, la valeur d'un paramètre peut correspondre à une mesure brute d'un capteur physique ou à une mesure obtenue par un traitement de signal plus ou moins complexe à partir de mesures brutes.

Dès lors, l'aéronef 1 peut comporter un senseur de puissance totale 80 relié par une liaison filaire ou non filaire au gestionnaire 70. Le senseur de puissance totale 80 émet au moins un signal de puissance totale porteur d'une information relative à une puissance mécanique ou à un couple moteur transmis au moteur à combustion 20 par les deux machines électriques 35, 40.

Le senseur de puissance totale 80 peut comprendre un couplemètre, voire aussi un senseur de vitesse, agencés sur la chaîne cinématique 50 et par exemple sur la liaison de connexion 57.

Le gestionnaire 70 peut alors être configuré pour piloter les deux machines électriques 35, 40 en fonction au moins du mode de fonctionnement courant et du signal de puissance totale.

L'aéronef 1 peut comporter au moins un senseur de puissance motrice 85 relié par une liaison filaire ou non filaire au gestionnaire 70, voire un senseur de puissance motrice 86, 87 par machine électrique.

Chaque senseur de puissance motrice 85 émet au moins un signal de puissance motrice porteur d'une information relative à une puissance mécanique ou à un couple moteur généré par une machine électrique 35, 40.

Un senseur de puissance motrice 85 peut comprendre un couplemètre, voire aussi un senseur de vitesse, agencés sur la chaîne cinématique 50 et par exemple sur la liaison mécanique 51,52 associée ou sur l'arbre de travail de la machine électrique 35,40.

Un senseur de puissance motrice 85 peut comprendre un capteur de mesure 95, 96 mesurant un courant électrique consommé par la machine électrique 35,40, cette mesure du courant électrique consommé étant l'image du couple moteur développé.

Le gestionnaire 70 peut alors être configuré pour piloter les deux machines électriques 35, 40 en fonction au moins du mode de fonctionnement courant et du ou des signaux de puissance motrice.

L'aéronef 1 peut comporter un senseur de fonctionnement total 90 relié par une liaison filaire ou non filaire au gestionnaire 70. Le senseur de fonctionnement total 90 émet au moins un signal de fonctionnement total porteur d'une information variant en fonction d'un état démarré ou non démarré du moteur à combustion 20.

Un senseur de fonctionnement total 90 peut comprendre un senseur de température 91 mesurant une température des gaz dans le moteur à combustion et/ou un senseur de vitesse 92 mesurant une vitesse du système mobile 21.

Le gestionnaire 70 peut alors être configuré pour piloter les deux machines électriques 35, 40 en fonction au moins du mode de fonctionnement courant et du ou des signaux de fonctionnement total.

L'aéronef 1 peut comporter un senseur de fonctionnement électrique 95, 96 par machine électrique 35, 40 relié par une liaison filaire ou non filaire au gestionnaire 70. Un senseur de fonctionnement électrique 35, 40 émet un signal de fonctionnement électrique porteur d'une donnée variant en fonction d'un état actif ou en panne de la machine électrique associée.

Un senseur de fonctionnement électrique 95, 96 peut comprendre un capteur de mesure mesurant un courant électrique consommé par la machine électrique 35, 40. Si le courant électrique consommé est différent d'un courant électrique attendu, éventuellement à une marge près, le gestionnaire peut en déduire la présence d'une panne par exemple.

Le gestionnaire 70 peut alors être configuré pour piloter les deux machines électriques 35, 40 en fonction au moins du mode de fonctionnement courant et des signaux de fonctionnement électrique.

Par exemple, le mode fonctionnement courant peut être un mode de fonctionnement de base. Durant un tel mode de fonctionnement de base, le gestionnaire 70 peut être configuré pour faire fonctionner uniquement une des deux machines électriques 35, 40 en mode moteur. Par exemple, le gestionnaire peut le cas échéant fermer le contacteur 58 d'une machine électrique 35 prédéterminée et ouvrir le contacteur 59 de l'autre machine électrique 40, et/ou peut transmettre une consigne à la machine électrique 35,40 à faire fonctionner en mode moteur.

Par exemple, un tel mode de fonctionnement de base peut comprendre le démarrage simple du moteur à combustion 20. Le gestionnaire 70 peut alors selon un exemple fermer le contacteur 58 d'une machine électrique 35 prédéterminée et ouvrir le contacteur 59 de l'autre machine électrique 40. Cette machine électrique 35 peut être configurée pour délivrer une puissance mécanique non régulée et peut ainsi développer la puissance maximale pour démarrer le moteur à combustion 20. Alternativement, le gestionnaire 70 peut alors selon un exemple fermer le contacteur 58 d'une machine électrique 35 prédéterminée pour la faire fonctionner en mode moteur, et fermer le contacteur 59 de l'autre machine électrique 40 pour la faire fonctionner en mode générateur électrique.

En présence d'une machine électrique 35,40 régulée en couple moteur, le gestionnaire 70 peut alors selon un exemple fermer le contacteur 58 de la machine électrique 35 prédéterminée, ouvrir le contacteur 59 de l'autre machine électrique 40, et transmettre à la machine électrique 35 à faire fonctionner en mode moteur une consigne prédéterminée. Par exemple, le gestionnaire 70 établit la ou les consignes en fonction notamment d'un couple moteur mesuré avec un senseur de puissance totale 80 ou un senseur de puissance motrice 85. Le gestionnaire 70 peut établir la ou les consignes avec la puissance mécanique transmise au moteur à combustion 20 pour atteindre un seuil mémorisé ou une plage de valeurs mémorisée correspondant au mode de fonctionnement courant et/ou pour que le couple moteur transmis au moteur à combustion 20 atteigne un seuil mémorisé ou une plage de valeurs mémorisée correspondant au mode de fonctionnement courant. Le gestionnaire 70 peut aussi déterminer si la machine électrique 35, 40 à faire fonctionner en mode moteur est en panne à l'aide du senseur de fonctionnement électrique 95, et peut le cas échéant désactiver cette machine électrique 35,40 et activer l'autre machine électrique 35,40 pour la faire fonctionner en mode moteur.

Un tel mode de fonctionnement de base peut comprendre la ventilation d'un moteur à combustion 20. Cette ventilation peut être obtenue en appliquant le procédé précédent par exemple.

Indépendamment de la possibilité d'appliquer ou non un mode de fonctionnement de base, le mode de fonctionnement courant peut être un mode de fonctionnement supérieur. Les termes « supérieur » et « de base » sont utilisés pour distinguer les modes de fonctionnement.

Le gestionnaire 70 est configuré lors d'un mode de fonctionnement supérieur pour faire fonctionner les deux machines électriques 35, 40 en mode moteur en même temps. Lors d'un mode de fonctionnement supérieur, les deux machines électriques 35, 40 sont pilotées pour délivrer des puissances mécaniques ou des couples moteurs différents et non nuls.

Par exemple, le gestionnaire 70 est configuré durant un mode de fonctionnement supérieur pour piloter une des deux machines électriques 35, 40 afin de délivrer la puissance maximale et l'autre machine électrique 40, 35 pour délivrer une puissance additionnelle inférieure à la puissance maximale. Le procédé appliqué comporte alors un fonctionnement des deux machines électriques 35, 40 en mode moteur sur contrôle du gestionnaire 70, les deux machines électriques 35, 40 délivrant des puissances mécaniques ou des couples moteurs différents et non nuls.

Le gestionnaire 70 peut alors le cas échéant fermer les contacteurs 58, 59 des machines électriques 35, 40. Si une des machines électriques 35,40 n'est pas régulée, cette machine électrique 35,40 fournit alors sa puissance maximale. Pour chaque machine électrique 35,40 régulée, le gestionnaire 70 peut générer une consigne et la transmettre à la machine électrique 35,40. Par exemple, le gestionnaire 70 établit la consigne en fonction notamment d'un couple moteur mesuré avec un senseur de puissance totale 80 ou un senseur de puissance motrice 85. Le gestionnaire 70 peut aussi déterminer si une machine électrique 35, 40 est en panne à l'aide d'un senseur de fonctionnement électrique 95, 96, et peut le cas échéant appliquer un mode de secours prédéterminé. Un tel mode de secours peut prévoir de faire fonctionner la machine électrique 35,40 restante pour qu'un paramètre atteigne une valeur prédéterminé, par exemple la puissance mécanique et/ou le couple moteur généré par la machine électrique 35, 40 encore en fonctionnement.

La figure 2 illustre un aéronef 1 multimoteur, et en particulier bimoteur. Chaque moteur à combustion 20, 200 est associé à son propre système d'entraînement 30, 300 du type précédemment décrit. Eventuellement, une source d'énergie électrique 60 est commune aux deux systèmes d'entraînement 30, 300.

Au moins un moteur à combustion 20,200 peut être rendu inactif en vol. Éventuellement, le système d'entraînement 30, 300 peut appliquer un mode de fonctionnement de base pour maintenir le système mobile 21 en mouvement, la chambre de combustion étant possiblement éteinte.

Un mode de fonctionnement supérieur comporte alors un mode de fonctionnement de redémarrage pour redémarrer en vol le moteur à combustion 20,200 rapidement.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent dans la mesure où un tel moyen reste dans le cadre de la présente invention telle que définie par les revendications.

## Revendications

1. Aéronef (1) muni d'une installation motrice (10) pourvue d'au moins un moteur à combustion (20) pour mettre en mouvement une chaîne de transmission de puissance (5), le moteur à combustion (20) étant relié mécaniquement à un système d'entraînement (30) apte à mettre en mouvement un système mobile (21) du moteur à combustion (20), le système d'entraînement (30) comprenant deux machines électriques (35, 40) reliées chacune par une chaîne cinématique (50) au moteur à combustion (20), les deux machines électriques (35, 40) étant reliées électriquement à au moins une source d'énergie électrique (60),
**caractérisé en ce que** ledit aéronef (1) comprend un gestionnaire (70) pilotant au moins une puissance mécanique ou un couple moteur délivré par chacune des deux machines électriques (35, 40) en fonction d'un mode de fonctionnement courant, ledit gestionnaire (70) étant configuré lors d'au moins un mode de fonctionnement supérieur pour piloter les deux machines électriques (35, 40) afin que les deux machines électriques (35, 40) délivrent simultanément des puissances mécaniques ou des couples moteurs différents et non nuls.

2. Aéronef selon la revendication 1,
**caractérisé en ce que** lesdites deux machines électriques (35, 40) comprennent une machine électrique de type moteur électrique ou générateur/démarreur et une autre machine électrique de type moteur électrique ou générateur/démarreur.

3. Aéronef selon l'une quelconque des revendications 1 à 2,
**caractérisé en ce que** lesdites deux machines électriques (35, 40) comprennent une machine électrique non régulée en couple moteur et une autre machine électrique régulée en couple moteur.

4. Aéronef selon l'une quelconque des revendications 1 à 3,
**caractérisé en ce que** chaque machine électrique (35, 40) délivre une puissance maximale dimensionnée pour démarrer seule le moteur à combustion (20) durant un mode de fonctionnement de base, le gestionnaire (70) étant configuré durant ledit au moins un mode de fonctionnement supérieur pour piloter une des deux machines électriques (35, 40) afin de délivrer ladite puissance maximale et l'autre machine électrique (40, 35) pour délivrer une puissance additionnelle.

5. Aéronef selon l'une quelconque des revendications 1 à 4,
**caractérisé en ce que** ledit gestionnaire (70) est configuré durant un mode de fonctionnement de base pour faire fonctionner uniquement une des deux machines électriques (35, 40).

6. Aéronef selon l'une quelconque des revendications 1 à 5,
**caractérisé en ce que** ledit aéronef (1) comporte une interface homme-machine (75) transmettant un signal de fonctionnement au gestionnaire (70), ledit signal de fonctionnement étant porteur d'un mode de fonctionnement à appliquer, le gestionnaire (70) étant configuré pour piloter lesdites deux machines électriques (35, 40) en fonction dudit mode de fonctionnement à appliquer.

7. Aéronef selon l'une quelconque des revendications 1 à 6,
**caractérisé en ce que** ledit aéronef (1) comporte un senseur de puissance totale (80) relié au gestionnaire (70), le senseur de puissance totale (80) générant au moins un signal de puissance totale porteur d'une information relative à une puissance mécanique ou à un couple moteur transmis au moteur à combustion (20) par les deux machines électriques (35, 40), ledit gestionnaire (70) étant configuré pour piloter les deux machines électriques (35, 40) en fonction au moins du mode de fonctionnement courant et du signal de puissance totale.

8. Aéronef selon l'une quelconque des revendications 1 à 7,
**caractérisé en ce que** ledit aéronef (1) comporte au moins un senseur de puissance motrice (85) relié au gestionnaire (70), le senseur de puissance motrice (85) générant au moins un signal de puissance motrice porteur d'une information relative à une puissance mécanique ou à un couple moteur généré par une des deux machines électriques (35, 40), ledit gestionnaire (70) étant configuré pour piloter les deux machines électriques (35, 40) en fonction au moins du mode de fonctionnement courant et du signal de puissance motrice.

9. Aéronef selon l'une quelconque des revendications 1 à 8,
**caractérisé en ce que** ledit aéronef (1) comporte un senseur de fonctionnement total (90) relié au gestionnaire (70), le senseur de fonctionnement total (90) générant un signal de fonctionnement total porteur d'une information variant en fonction d'un état démarré ou non démarré du moteur à combustion (20), ledit gestionnaire (70) étant configuré pour piloter les deux machines électriques (35, 40) en fonction au moins du mode de fonctionnement courant et du signal de fonctionnement total.

10. Aéronef selon l'une quelconque des revendications 1 à 9,
**caractérisé en ce que** ledit aéronef (1) comporte un senseur de fonctionnement électrique (95, 96) par machine électrique (35, 40) relié au gestionnaire (70), chaque senseur de fonctionnement électrique (35, 40) générant un signal de fonctionnement électrique porteur d'une donnée variant en fonction d'un état actif ou en panne de la machine électrique associé, ledit gestionnaire (70) étant configuré pour piloter les deux machines électriques (35, 40) en fonction au moins du mode de fonctionnement courant et des signaux de fonctionnement électrique.

11. Aéronef selon l'une quelconque des revendications 1 à 10,
**caractérisé en ce que** ledit aéronef (1) comporte un contacteur (58, 59) par machine électrique (35, 40), chaque contacteur (58, 59) étant interposé électriquement entre une machine électrique (35, 40) et ladite au moins une source d'énergie électrique (60), chaque contacteur (58, 59) étant piloté par le gestionnaire (70).

12. Aéronef selon l'une quelconque des revendications 1 à 11,
**caractérisé en ce que** ledit moteur à combustion (20) étant apte à être inactif en vol, ledit au moins un mode de fonctionnement supérieur comporte un mode de fonctionnement de redémarrage pour redémarrer en vol le moteur à combustion (20) rendu inactif.

13. Procédé de pilotage d'une installation motrice (10) d'un aéronef (1) pourvue d'au moins un moteur à combustion (20) pour mettre en mouvement une chaîne de transmission de puissance (5), le moteur à combustion (20) étant relié mécaniquement à un système d'entraînement (30) apte à mettre en mouvement un système mobile (21) du moteur à combustion (20), le système d'entraînement (30) comprenant deux machines électriques (35, 40) reliées chacune par une chaîne cinématique (50) au moteur à combustion (20), les deux machines électriques (35, 40) étant reliées électriquement à au moins une source d'énergie électrique (60),
**caractérisé en ce que** le procédé comporte lors d'un mode de fonctionnement supérieur, un fonctionnement des deux machines électriques (35, 40) en mode moteur sur contrôle d'un gestionnaire (70), les deux machines électriques (35, 40) délivrant des puissances mécaniques ou des couples moteurs différents et non nuls.

## Patentansprüche

1. Luftfahrzeug (1) mit einer Triebwerksanlage (10), die mindestens einem Verbrennungsmotor (20) umfasst, um eine Leistungsübertragungskette (5) in Bewegung zu setzen, wobei der Verbrennungsmotor (20) mechanisch mit einem Antriebssystem (30) verbunden ist, das geeignet ist, ein bewegliches System (21) des Verbrennungsmotors (20) in Bewegung zu setzen, wobei das Antriebssystem (30) zwei elektrische Maschinen (35, 40) umfasst, die jeweils über eine kinematische Kette (50) mit dem Verbrennungsmotor (20) verbunden sind, wobei die beiden elektrischen Maschinen (35, 40) elektrisch mit mindestens einer elektrischen Energiequelle (60) verbunden sind,
**dadurch gekennzeichnet, dass** das Luftfahrzeug (1) einen Manager (70) umfasst, der mindestens eine mechanische Leistung oder ein Motordrehmoment steuert, die bzw. das von jeder der beiden elektrischen Maschinen (35, 40) in Abhängigkeit von einem aktuellen Betriebsmodus abgegeben wird, wobei der Manager (70) in mindestens einem höheren Betriebsmodus konfiguriert ist, um die beiden elektrischen Maschinen (35, 40) so zu steuern, dass die beiden elektrischen Maschinen (35, 40) gleichzeitig unterschiedliche und von Null verschiedene mechanische Leistungen oder Motordrehmomente abgeben.

2. Luftfahrzeug nach Anspruch 1,
**dadurch gekennzeichnet, dass** die beiden elektrischen Maschinen (35, 40) eine elektrische Maschine vom Typ Elektromotor oder Startergenerator und eine weitere elektrische Maschine vom Typ Elektromotor oder Startergenerator umfassen.

3. Luftfahrzeug nach einem der Ansprüche 1 bis 2,
**dadurch gekennzeichnet, dass** die beiden elektrischen Maschinen (35, 40) eine elektrische Maschine ohne Regelung des Motordrehmoments und eine weitere elektrische Maschine mit Regelung des Motordrehmoments umfassen.

4. Luftfahrzeug nach einem der Ansprüche 1 bis 3,
**dadurch gekennzeichnet, dass** jede elektrische Maschine (35, 40) eine maximale Leistung liefert, die bemessen ist, um den Verbrennungsmotor (20) in einem Basisbetriebsmodus allein zu starten, wobei der Manager (70) in dem mindestens einen höheren Betriebsmodus konfiguriert ist, um eine der beiden elektrischen Maschinen (35, 40) zur Lieferung der maximalen Leistung und die andere elektrische Maschine (40, 35) zur Lieferung einer zusätzlichen Leistung anzusteuern.

5. Luftfahrzeug nach einem der Ansprüche 1 bis 4,
**dadurch gekennzeichnet, dass** der Manager (70) in einem Basisbetriebsmodus konfiguriert ist, um nur eine der beiden elektrischen Maschinen (35, 40) zu betreiben.

6. Luftfahrzeug nach einem der Ansprüche 1 bis 5,
**dadurch gekennzeichnet, dass** das Luftfahrzeug (1) eine Mensch-Maschine-Schnittstelle (75) umfasst, die ein Betriebssignal an den Manager (70) überträgt, wobei das Betriebssignal Träger eines anzuwendenden Betriebsmodus ist, und der Manager (70) konfiguriert ist, um die beiden elektrischen Maschinen (35, 40) in Abhängigkeit von dem anzuwendenden Betriebsmodus anzusteuern.

7. Luftfahrzeug nach einem der Ansprüche 1 bis 6,
**dadurch gekennzeichnet, dass** das Luftfahrzeug (1) einen mit dem Manager (70) verbundenen Gesamtleistungssensor (80) umfasst, wobei der Gesamtleistungssensor (80) mindestens ein Gesamtleistungssignal erzeugt, das Träger einer Information bezüglich einer mechanischen Leistung oder eines Motordrehmoments ist, die/das von den beiden elektrischen Maschinen (35, 40) an den Verbrennungsmotor (20) übertragen wird, und der Manager (70) konfiguriert ist, um die beiden elektrischen Maschinen (35, 40) in Abhängigkeit von mindestens dem aktuellen Betriebsmodus und dem Gesamtleistungssignal zu steuern.

8. Luftfahrzeug nach einem der Ansprüche 1 bis 7,
**dadurch gekennzeichnet, dass** das Luftfahrzeug (1) mindestens einen mit dem Manager (70) verbundenen Antriebsleistungssensor (85) umfasst, wobei der Antriebsleistungssensor (85) mindestens ein Antriebsleistungssignal erzeugt, das Träger einer Information bezüglich einer mechanischen Leistung oder eines Antriebsdrehmoments ist, die/das von einer der beiden elektrischen Maschinen (35, 40) erzeugt wird, und der Manager (70) konfiguriert ist, um die beiden elektrischen Maschinen (35, 40) in Abhängigkeit von mindestens dem aktuellen Betriebsmodus und dem Antriebsleistungssignal zu steuern.

9. Luftfahrzeug nach einem der Ansprüche 1 bis 8,
**dadurch gekennzeichnet, dass** das Luftfahrzeug (1) einen mit dem Manager (70) verbundenen Gesamtbetriebssensor (90) umfasst, wobei der Gesamtbetriebssensor (90) ein Gesamtbetriebssignal erzeugt, das Träger einer Information ist, die sich in Abhängigkeit von einem angelassenen oder nicht angelassenen Zustand des Verbrennungsmotors (20) ändert, und der Manager (70) konfiguriert ist, um die beiden elektrischen Maschinen (35, 40) in Abhängigkeit von mindestens dem aktuellen Betriebsmodus und dem Gesamtbetriebssignal zu steuern.

10. Luftfahrzeug nach einem der Ansprüche 1 bis 9,
**dadurch gekennzeichnet, dass** das Luftfahrzeug (1) einen elektrischen Betriebssensor (95, 96) pro elektrischer Maschine (35, 40) aufweist, der mit dem Manager (70) verbunden ist, wobei jeder elektrische Betriebssensor (35, 40) ein elektrisches Betriebssignal erzeugt, das Träger von Daten ist, die sich in Abhängigkeit von einem aktiven oder gestörten Zustand der zugehörigen elektrischen Maschine ändern, wobei der Manager (70) konfiguriert ist, um die beiden elektrischen Maschinen (35, 40) in Abhängigkeit von mindestens dem aktuellen Betriebsmodus und den elektrischen Betriebssignalen zu steuern.

11. Luftfahrzeug nach einem der Ansprüche 1 bis 10,
**dadurch gekennzeichnet, dass** das Luftfahrzeug (1) ein Schütz (58, 59) pro elektrischer Maschine (35, 40) aufweist, wobei jedes Schütz (58, 59) elektrisch zwischen einer elektrischen Maschine (35, 40) und der mindestens einen elektrischen Energiequelle (60) angeordnet ist, wobei jedes Schütz (58, 59) durch den Manager (70) gesteuert ist.

12. Luftfahrzeug nach einem der Ansprüche 1 bis 11,
**dadurch gekennzeichnet, dass** der Verbrennungsmotor (20) ausgelegt ist, während des Fluges inaktiv zu sein, wobei der mindestens einen höhere Betriebsmodus einen Wiederanlassbetriebsmodus zum Wiederanlassen des inaktiv gemachten Verbrennungsmotors (20) während des Fluges umfasst.

13. Verfahren zum Steuern einer Triebwerksanlage (10) eines Luftfahrzeugs (1), die mindestens einen Verbrennungsmotor (20) umfasst, um eine Leistungsübertragungskette (5) in Bewegung zu setzen, wobei der Verbrennungsmotor (20) mechanisch mit einem Antriebssystem (30) verbunden ist, das geeignet ist, ein bewegliches System (21) des Verbrennungsmotors (20) in Bewegung zu setzen, wobei das Antriebssystem (30) zwei elektrische Maschinen (35, 40) umfasst, die jeweils über eine kinematische Kette (50) mit dem Verbrennungsmotor (20) verbunden sind, und die beiden elektrischen Maschinen (35, 40) elektrisch mit mindestens einer elektrischen Energiequelle (60) verbunden sind,
**dadurch gekennzeichnet, dass** das Verfahren während eines höheren Betriebsmodus einen Betrieb der beiden elektrischen Maschinen (35, 40) im Motormodus unter Steuerung eines Managers (70) umfasst, wobei die beiden elektrischen Maschinen (35, 40) unterschiedliche und von Null verschiedene mechanische Leistungen oder Motormomente abgeben.

## Claims

1. Aircraft (1) equipped with a propulsion system (10) provided with at least one combustion engine (20) to drive a power transmission chain (5), the combustion engine (20) being mechanically connected to a drive system (30) capable of setting in motion a movable system (21) of the combustion engine (20), the drive system (30) comprising two electric machines (35, 40), each connected by a kinematic chain (50) to the combustion engine (20), the two electric machines (35, 40) being electrically connected to at least one electrical energy source (60),
**characterized in that** said aircraft (1) comprises a controller (70) that manages at least one mechanical power or engine torque delivered by each of the two electric machines (35, 40) depending on a current operating mode, said controller (70) being configured in at least one higher operating mode to control the two electric machines (35, 40) so that the two electric machines (35, 40) simultaneously deliver different and non-zero mechanical powers or engine torques.

2. Aircraft according to Claim 1,
**characterized in that** said two electric machines (35, 40) comprise one electric machine of the electric motor or generator/starter type and another electric machine of the electric motor or generator/starter type.

3. Aircraft according to any one of Claims 1 to 2,
**characterized in that** said two electric machines (35, 40) comprise one electric machine that is unregulated in engine torque and another electric machine that is regulated in engine torque.

4. Aircraft according to any one of Claims 1 to 3,
**characterized in that** each electric machine (35, 40) delivers a rated maximum power to start the combustion engine (20) alone during a basic operating mode, the controller (70) being configured during said at least one higher operating mode to control one of the two electric machines (35, 40) to deliver said maximum power and the other electric machine (40, 35) to deliver additional power.

5. Aircraft according to any one of Claims 1 to 4,
**characterized in that** said controller (70) is configured during a basic operating mode to make only one of the two electric machines (35, 40) operate.

6. Aircraft according to any one of Claims 1 to 5,
**characterized in that** said aircraft (1) comprises a human-machine interface (75) that transmits an operating signal to the controller (70), said operating signal carrying an operating mode to be applied, the controller (70) being configured to control said two electric machines (35, 40) depending on said operating mode to be applied.

7. Aircraft according to any one of Claims 1 to 6,
**characterized in that** said aircraft (1) comprises a total power sensor (80) connected to the controller (70), the total power sensor (80) generating at least one total power signal containing information relating to a mechanical power or engine torque transmitted to the combustion engine (20) by the two electric machines (35, 40), said controller (70) being configured to control the two electric machines (35, 40) depending at least on the current operating mode and the total power signal.

8. Aircraft according to any one of Claims 1 to 7,
**characterized in that** said aircraft (1) comprises at least one motor power sensor (85) connected to the controller (70), the motor power sensor (85) generating at least one motor power signal containing information relating to a mechanical power or engine torque generated by one of the two electric machines (35, 40), said controller (70) being configured to control the two electric machines (35, 40) depending at least on the current operating mode and the motor power signal.

9. Aircraft according to any one of Claims 1 to 8,
**characterized in that** said aircraft (1) comprises a total operating sensor (90) connected to the controller (70), the total operating sensor (90) generating a total operating signal containing information that varies depending on whether the combustion engine (20) is started or not, said controller (70) being configured to control the two electric machines (35, 40) depending at least on the current operating mode and the total operating signal.

10. Aircraft according to any one of Claims 1 to 9,
**characterized in that** said aircraft (1) comprises an electric operation sensor (95, 96) for each electric machine (35, 40) connected to the controller (70), each electric operation sensor (35, 40) generating an electric operation signal containing data that varies depending on whether the associated electric machine is active or malfunctioning, said controller (70) being configured to control the two electric machines (35, 40) depending at least on the current operating mode and the electric operation signals.

11. Aircraft according to any one of Claims 1 to 10,
**characterized in that** said aircraft (1) comprises a contactor (58, 59) for each electric machine (35, 40), each contactor (58, 59) being electrically inserted between an electric machine (35, 40) and said at least one electrical energy source (60), each contactor (58, 59) being controlled by the controller (70).

12. Aircraft according to any one of Claims 1 to 11,
**characterized in that** said combustion engine (20) is capable of being inactive during flight, said at least one higher operating mode comprising a restart operating mode to restart the combustion engine (20) in flight when it is inactive.

13. Method for controlling a propulsion system (10) of an aircraft (1) provided with at least one combustion engine (20) to set in motion a power transmission chain (5), the combustion engine (20) being mechanically connected to a drive system (30) capable of setting in motion a movable system (21) of the combustion engine (20), the drive system (30) comprising two electric machines (35, 40) each connected by a kinematic chain (50) to the combustion engine (20), the two electric machines (35, 40) being electrically connected to at least one electrical energy source (60),
**characterized in that** during a higher operating mode the method involves operating the two electric machines (35, 40) in motor mode under the control of a controller (70), the two electric machines (35, 40) delivering different and non-zero mechanical powers or engine torques.
